# EUROPÄISCHE PATENTSCHRIFT

(11) **EP 3 825 787 B1**
(45) Veröffentlichungstag und Bekanntmachung des Hinweises auf die Patenterteilung: **14.09.2022**
(21) Anmeldenummer: 19211175.5
(22) Anmeldetag: 25.11.2019
(51) Int. Cl.: G05B 5/01

(54) **VERFAHREN ZUR SCHNELLEN REGELUNG DES MITTELWERTS EINER REGELGRÖSSE, DATENTRÄGER MIT PROGRAMM SOWIE MOTORREGELUNG ZUR AUSFÜHRUNG DES VERFAHRENS UND ANTRIEBSMOTOR MIT EINER DERARTIGEN MOTORREGELUNG**
METHOD FOR RAPID CONTROL OF THE MEAN OF A REGULATING VARIABLE, DATA CARRIER WITH PROGRAM, AND ENGINE CONTROL FOR CARRYING OUT SAID METHOD AND DRIVE MOTOR WITH SUCH AN ENGINE CONTROL
PROCÉDÉ DE RÉGULATION RAPIDE DE LA VALEUR MOYENNE D'UNE GRANDEUR DE RÉGULATION, SUPPORT DE DONNÉES AVEC PROGRAMME AINSI QUE RÉGULATION DE MOTEUR PERMETTANT DE METTRE EN OEUVRE LEDIT PROCÉDÉ ET MOTEUR D'ENTRAÎNEMENT DOTÉ D'UNE TELLE RÉGULATION DE MOTEUR

(43) Veröffentlichungstag der Anmeldung: 26.05.2021
(73) Patentinhaber: Maxon International AG, 6072 Sachseln (CH)
(72) Erfinder: Stoop, Markus, 6064 Kerns (CH)
(74) Vertreter: Grünecker Patent- und Rechtsanwälte PartG mbB

(56) Entgegenhaltungen:
- EP-A2- 2 498 395
- US-A1- 2008 071 414

## Beschreibung

Die vorliegende Erfindung betrifft ein Verfahren zur Regelung einer Regelgröße auf eine vorgegebene Führungsgröße nach dem Oberbegriff des unabhängigen Anspruchs 1.

Bei dem gattungsgemäßen Verfahren wird der Istwert und/oder der gemessene Istwert der Regelgröße durch einen fluktuierenden Effekt mit einer gewissen Periodizität beeinflusst. Dies ist beispielsweise dann der Fall, wenn die Drehzahl eines Antriebsmotors geregelt werden soll, der zum Antrieb eines Exzentertriebs oder zum Antrieb einer Membran- oder Kolbenpumpe oder zum Antrieb einer einseitig wirkenden Hub- und/oder Förderanlage dient oder welcher bei Mechaniken eingesetzt wird, die nur in einer Bewegungsrichtung belastet sind. Weiter ist dies auch der Fall, wenn ein Drehgeber zur Bestimmung der Rotorlage und der Drehzahl eines Antriebsmotors beispielsweise einen Teilungsfehler oder Ungenauigkeiten aufweist, wodurch die gemessen Istwerte der Regelgröße abweichend von dem realen Istwert der Regelgröße periodisch beeinflusst werden. Derartige Ungenauigkeiten können beispielsweise bei der Montage des Drehgebers entstehen.

Ferner wird die Regelgröße bei dem gattungsgemäßen Verfahren nur dann nachgeregelt, wenn eine Regeldifferenz zwischen der Führungsgröße und einem über die Periodendauer der Periodizität gemittelten Mittelwert des Istwerts der Regelgröße besteht. Hierzu werden innerhalb der Periodendauer einer jeden Periodizität zu konkreten Messzeitpunkten t₁ bis tₙ in einem gewissen Reglertakt Messwerte M₁ bis Mₙ ermittelt, die mit dem jeweiligen Istwert der Regelgröße korrelieren oder dem Istwert der Regelgröße entsprechen, und/oder aus welchen sich die Regeldifferenz zwischen der Führungsgröße und dem Mittelwert des Istwertes der Regelgröße ermitteln lässt. Die Anzahl n an Messzeitpunkten innerhalb der Periodendauer einer Periodizität entspricht der Anzahl n an zugehörigen Messwerten.

Aus dem Stand der Technik sind schnelle klassische Regler bekannt, die Schwankungen der Regelgröße innerhalb einer Lastperiode auszugleichen versuchen. Denkt man beispielsweise an einen Drehzahlregler, so führt dies dazu, dass in Phasen, in welchen die Last wenig Energie aufnimmt oder sogar Energie an den Antrieb zurückliefert, eine unnötige Abbremsung durch die Regelung bewirkt wird, wohingegen in Phasen, in welchen wieder mehr Energie zur Lastbewältigung benötigt wird, zusätzliche Energie aufgebracht werden muss, um die unmittelbar vorangegangene Bremsphase zu kompensieren. Das System kann in diesem Fall nicht von dem Massenträgheitsmoment der Last profitieren. Eine sehr weich eingestellte bzw. langsame Regelung oder ein gesteuerter, nicht geregelter Antrieb lassen hingegen größere Drehzahlschwankungen innerhalb einer Lastperiode zu und profitieren somit auch von dem Massenträgheitsmoment der Last. Eine weich eingestellte Regelung reagiert unter Umständen jedoch zu langsam auf Änderungen der Führungsgröße oder auf Änderungen der mittleren Regelgröße. Ein gesteuerter, nicht geregelter Antrieb reagiert sogar überhaupt nicht auf Änderungen der mittleren Regelgröße bzw. auf Änderungen der Last.

Ein Verfahren der gattungsgemäßen Art ist beispielsweise aus EP 2498395 A2 bekannt. Diese Druckschrift beschreibt ein Verfahren zur Regelung der Drehzahl eines Elektromotors, bei welchem ein Mittelwert der tatsächlichen Drehzahl benutzt wird, um für die folgende Umdrehung eine Abruftabelle mit Pulsweitenmodulationswerten zu erstellen, die an die erwartete Belastung des Motors angepasst sind. Das aus dieser Druckschrift bekannte Verfahren ist relativ aufwändig und erfordert eine hohe Rechenleistung. Auch ist das Verfahren hinsichtlich der Reaktionsgeschwindigkeit der Regelung verbesserungsfähig.

Es ist daher Aufgabe der vorliegenden Erfindung, ein Verfahren der gattungsgemäßen Art anzugeben, welches eine schnelle Reaktion auf Änderungen des Mittelwerts der Regelgröße erlaubt, dabei die oben angesprochenen Probleme herkömmlicher schneller Regler vermeidet, und wenig Rechenleistung erfordert.

Die Aufgabe wird gelöst durch die Merkmale des unabhängigen Anspruchs 1. Demnach liegt bei einem Verfahren nach dem Oberbegriff des unabhängigen Anspruchs 1 dann eine erfindungsgemäße Lösung vor, wenn die Regeldifferenz zu jedem konkreten Messzeitpunkt t₁ bis tₙ ermittelt wird und die Regelgröße gegebenenfalls nachgeregelt wird.

Der eigentliche Abtasttakt eines Sensors, der zur Ermittlung des Istwerts der Regelgröße oder einer entsprechend korrelierenden Größe verwendet wird, wird dem Reglertakt vorzugsweise gleichgesetzt, kann jedoch auch vom Reglertakt abweichen, sodass die eigentlichen Messzeitpunkte unter Umständen von den im Reglertakt liegenden Messzeitpunkten abweichen, und die Messwerte unter Umständen somit nur näherungsweise Gültigkeit haben.

Vorteilhafte Ausführungsformen des erfindungsgemäßen Verfahrens sind Gegenstand der Unteransprüche.

Gemäß einer besonders bevorzugten Ausführungsform des erfindungsgemäßen Verfahrens ist vorgesehen, dass zur Ermittlung der Regeldifferenz ein Differenzwert zwischen dem Messwert zum aktuellen Messzeitpunkt und dem entsprechenden um die Anzahl n an Messzeitpunkten zurückliegenden Messwert der vorhergehenden Periodizität berechnet wird, wobei die Regeldifferenz aus diesem Differenzwert abgeleitet wird. Sofern sich die Periodendauer der Periodizität nicht ändert, sondern konstant bleibt, wird somit der aktuelle Messwert mit einem um die Periodendauer zurückliegenden Messwert verglichen. Bei dieser Ausführungsform wird keine große Rechenleistung benötigt. Die Regeldifferenz kann schnell und mithilfe kostengünstiger Hardware ermittelt werden. Ist die Differenz zwischen dem Messwert zum aktuellen Messzeitpunkt und dem entsprechenden um die Anzahl n an Messzeitpunkten zurückliegenden Messwert gleich Null, so kann gemäß einer vereinfachten Ermittlung der Regeldifferenz angenommen werden, dass keine Regeldifferenz besteht.

Gemäß einer alternativen Ausführungsform des erfindungsgemäßen Verfahrens kann zur Ermittlung der Regeldifferenz auch der tatsächliche Mittelwert der Regelgröße aus dem Messwert zum aktuellen Messzeitpunkt sowie aus den n-1 Messwerten der zurückliegenden n-1 Messzeitpunkte berechnet werden. Zur Berechnung der Regeldifferenz kann dann die Differenz zwischen der Führungsgröße und diesem Mittelwert berechnet werden. Diese Ausführungsform erfordert eine etwas größere Rechenleistung.

Gemäß einer weiteren bevorzugten Ausführungsform des erfindungsgemäßen Verfahrens wird der Reglertakt derart gewählt, dass mindestens sechs Messzeitpunkte innerhalb der Periodendauer der Periodizität liegen. Diese Forderung gilt vorzugsweise auch für den eigentlichen Abtasttakt eines Sensors, der zur Ermittlung des Istwerts der Regelgröße oder einer entsprechend korrelierenden Größe verwendet wird. Durch diese Ausführungsform wird sichergestellt, dass die Messwerte die Ermittlung einer aussagekräftigen bzw. korrekten Regeldifferenz zulassen. Besonders bevorzugt ist vorgesehen, dass der Reglertakt derart gewählt wird, dass mindestens zwölf Messzeitpunkte innerhalb der Periodendauer der Periodizität liegen. Weiter vorzugsweise beträgt die Abtastzeit des Reglertakts höchstens 1 ms.

Gemäß einer weiteren bevorzugten Ausführungsform des erfindungsgemäßen Verfahrens wird die Periodendauer der Periodizität fortlaufend durch Auswertung der Messwerte ermittelt. Die Ermittlung der Periodendauer der Periodizität erfolgt weiter vorzugsweise durch dieselbe Reglereinheit, die auch zur Regelung der Regelgröße verwendet wird. Dies erhöht zum einen die Zuverlässigkeit und hält zum anderen auch die Kosten für die erforderliche Hardware auf einem geringen Niveau. In einer alternativen Ausführungsform des erfindungsgemäßen Verfahrens kann der Reglereinheit eine fest eingestellte Periodendauer der Periodizität vorgegeben werden, oder es kann eine externe Quelle zum Einsatz kommen, die der Reglereinheit die Periodendauer übermittelt.

Bei einer besonders bevorzugten Ausführungsform des erfindungsgemäßen Verfahrens wird der Istwert der Regelgrösse durch eine fluktuierende Last mit einer gewissen Lastperiode beeinflusst.

Bei einer weiteren besonders bevorzugten Ausführungsform des erfindungsgemäßen Verfahrens wird der gemessene Istwert der Regelgrösse durch periodische Messfehler innerhalb einer Messperiode, insbesondere durch Teilungsfehler oder Ungenauigkeiten in einer Massverkörperung eines Drehgebers, beeinflusst. Vorzugsweise handelt es sich hierbei um einen magnetischen, optischen, induktiven oder kapazitiven Drehgeber.

Weiter besonders bevorzugt bezieht sich das Verfahren auf ein Verfahren zur Regelung eines Antriebsmotors, wobei die Regelgröße die Drehzahl des Antriebsmotors ist.

Die vorliegende Erfindung stellt auch einen maschinenlesbaren Datenträger mit einem Programm bereit, wobei der Datenträger der Motorregelung eines Antriebsmotors zugeordnet ist, und wobei das Programm eine Befehlsfolge enthält, bei deren Ausführung durch einen Prozessor das erfindungsgemäße Verfahren, insbesondere in einer der zuvor beschriebenen Ausführungsformen, ausgeführt wird.

Ferner stellt die vorliegende Erfindung auch eine Motorregelung für einen Antriebsmotor bereit, welche zur Ausführung des erfindungsgemäßen Verfahrens, insbesondere in einer der zuvor beschriebenen Ausführungsformen, ausgelegt und eingerichtet ist.

Weiter stellt die Erfindung auch einen Antriebsmotor bereit, welcher einen Rotor, sowie eine erfindungsgemäße Motorregelung aufweist. Besonders bevorzugt handelt es sich bei dem Antriebsmotor um einen Elektromotor.

Gemäß einer bevorzugten Ausführungsform der vorliegenden Erfindung weist der Antriebsmotor zumindest einen Sensor zur Erfassung der Lage oder Position oder Geschwindigkeit des Rotors auf, wobei die Motorregelung derart eingerichtet ist, dass sie die Regeldifferenz anhand von Messwerten errechnet, die vom Sensor bereitgestellt werden. Dabei ist es von besonderem Vorteil, wenn der Antriebsmotor ein Elektromotor ist, wobei der Sensor ein Hallsensor ist, dessen Signal auch zur Kommutierung des Elektromotors verwendet wird. Diese Ausführungsform gewährleistet eine kostengünstige Herstellung.

In einer weiteren Ausführungsform ist die Motorregelung derart eingerichtet, dass sie die Regeldifferenz anhand von Werten errechnet, die sie sensorlos anhand der Parameter Induktivität und elektromagnetische Kraft durch einen Algorithmus zur Bestimmung der Lage oder Position oder Geschwindigkeit des Rotors erzeugt. Dabei handelt es sich um einen sogenannten sensorlosen Steuerungsalgorithmus, wie er z.B. in den Patentanmeldungen EP 2 924 870 A1 und EP 3 288 175 A1 beschrieben ist.

Ausführungsbeispiele der Erfindung werden im Folgenden anhand von Zeichnungen näher erläutert.

Es zeigen:
- Figur 1: eine schematische Ablaufdarstellung eines erfindungsgemäßen Verfahrens zur Regelung der Drehzahl eines Elektromotors, und
- Figur 2: den zugehörigen Drehzahlverlauf des Elektromotors.

Für die folgenden Ausführungen gilt, dass gleiche Teile durch gleiche Bezugszeichen bezeichnet werden. Sofern in einer Figur Bezugszeichen enthalten sind, auf die in der zugehörigen Figurenbeschreibung nicht näher eingegangen wird, so wird auf vorangehende oder nachfolgende Figurenbeschreibungen Bezug genommen.

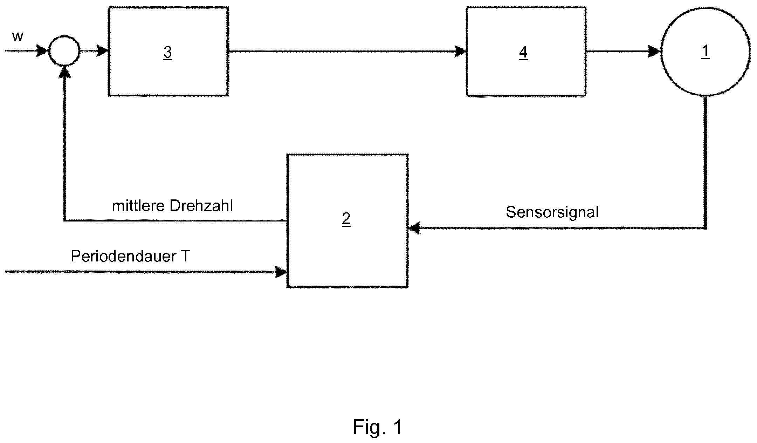

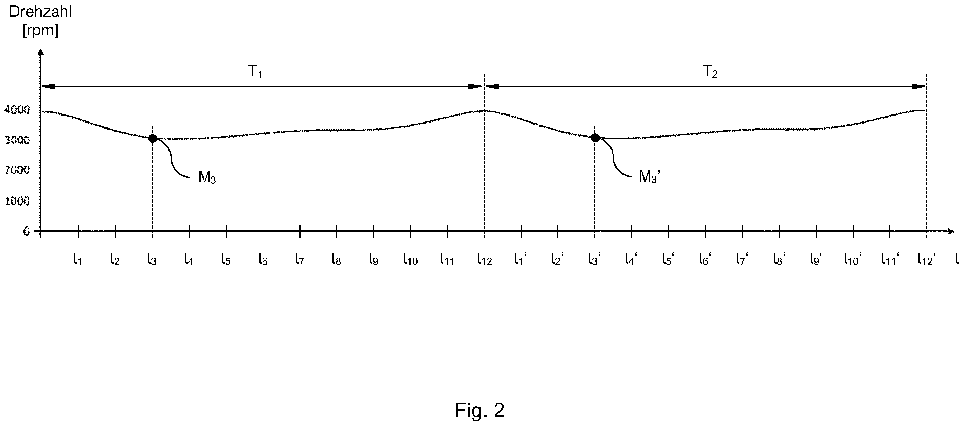

Figur 1 zeigt eine schematische Ablaufdarstellung eines erfindungsgemäßen Verfahrens zur Regelung der Drehzahl eines Elektromotors 1, welcher mit einerfluktuierenden Last, beispielsweise einer Membran- oder Kolbenpumpe, verbunden ist, die eine gewisse Lastperiode aufweist. Das hier gezeigte Ablaufschema eignet sich aber alternativ auch gleichermaßen zur Verwendung mit einem Drehgeber, welcher Teilungsfehler oder Ungenauigkeiten in seiner Massverkörperung innerhalb einer gewissen Messperiode aufweist. In Figur 2, die den tatsächlichen Drehzahlverlauf des Elektromotors über der Zeit t zeigt, sind zwei vollständige, aufeinanderfolgende Periodendauern T₁ und T₂ dargestellt. Es ist gut zu erkennen, dass die tatsächliche Drehzahl zu Beginn und Ende einer jeden Periodendauer jeweils ein Maximum erreicht. Es handelt sich somit um einen periodisch wiederkehrenden Lastverlauf, der zu einem entsprechend ebenfalls periodisch wiederkehrenden Drehzahlverlauf des Elektromotors führt. Im dargestellten Fall bleibt die Periodendauer gleich. Die Periodendauer T₂ entspricht somit der Periodendauer T₁. Das Verfahren funktioniert optimal, wenn die Laständerungen zum Drehwinkel des Antriebs korrelieren und eine ein- oder mehrfache Periodizität zur Drehzahl des Elektromotors aufweisen. An dieser Stelle wird jedoch darauf hingewiesen, dass sich das erfindungsgemäße Verfahren auch dann eignet, wenn sich die Lage der Laständerungen und/oder die Periodendauer in Relation zum Reglertakt bzw. Abtasttakt langsam ändern. Gleichermaßen kann sich auch der Verlauf der Laständerung im Vergleich zum Reglertakt bzw. Abtasttakt langsam ändern.

Der in Figur 1 lediglich schematisch dargestellte Elektromotor 1 verfügt zum Zwecke der Kommutierung über zumindest einen Hallsensor, dessen Sensorsignal zur Ermittlung der Rotorposition oder Rotordrehzahl verwendet werden kann und bei dem erfindungsgemäßen Verfahren zur Ermittlung eines über die Periodendauer T der Lastperiode gemittelten Mittelwerts der tatsächlichen Drehzahl dienen kann. Das Sensorsignal wird hierzu der Drehzahlbestimmungseinheit 2 zugeführt, die zur Ermittlung der mittleren Drehzahl auch die Periodendauer T berücksichtigt. Bei manchen Systemen kann die Motorregelung unter Umständen mit einer fest vorgegebenen Periodendauer arbeiten. In der Regel ist es aber notwendig, die Periodendauer laufend zu ermittelten und der Drehzahlbestimmungseinheit 2 zu übermitteln. Dies kann beispielsweise durch die Motorregelung selbst, insbesondere durch entsprechende Auswertung des Sensorsignals, oder auch durch eine externe Auswerteeinheit erfolgen.

Bei dem in Figur 2 dargestellten Ausführungsbeispiel wurde der Reglertakt bzw. Abtasttakt so gewählt, dass pro Lastperiode jeweils zu insgesamt zwölf konkreten Zeitpunkten (t₁ bis t₁₂ innerhalb der Periodendauer T₁; t₁' bis t₁₂' innerhalb der Periodendauer T₂) jeweils insgesamt zwölf Messwerte (M₁ bis M₁₂ innerhalb der Periodendauer T₁; M₁' bis M₁₂' innerhalb der Periodendauer T₂) ermittelt werden. In jedem konkreten Zeitpunkt kann anhand des jeweils aktuellen Messwerts und der elf unmittelbar davor gemessenen Messwerte ein Mittelwert für die Drehzahl des Elektromotors berechnet werden. Dieser Mittelwert kann sodann, wie in Figur 1 dargestellt, mit der entsprechenden Führungsgröße w, die der Solldrehzahl entspricht, verglichen werden. Die entsprechende, daraus sich ergebende Regeldifferenz wird dem eigentlichen Regler 3 der Motorregelung zugeführt. Dieser gibt wiederum entsprechende Vorgabewerte an den Inverter 4 weiter, welcher die einzelnen Phasen des Elektromotors 1 mit Spannung versorgt.

Anstatt zu jedem Messzeitpunkt aus dem aktuellen Messwert und den elf unmittelbar davor erfassten Messwerten einen Mittelwert der Motordrehzahl zu berechnen, kann zur Ermittlung der Regeldifferenz, wie es in Figur 2 angedeutet ist, alternativ auch die Differenz zwischen dem aktuellen Messwert und dem um die Zahl 12 an Messzeitpunkten zurückliegenden Messwert der vorhergehenden Lastperiode berechnet werden. In Figur 2 sind hierzu beispielhaft die Messwerte M₃' der zweiten Lastperiode T₂ und M₃ der ersten Lastperiode T₁ herausgegriffen. Sofern die Differenz zwischen dem Messwert zum aktuellen Messzeitpunkt und dem entsprechenden um die Anzahl 12 an Messzeitpunkten zurückliegenden Messwert gleich Null ist, kann gemäß einer vereinfachten Ermittlung der Regeldifferenz angenommen werden, dass keine Regeldifferenz besteht.

### Bezugszeichenliste

- 1: Antriebsmotor / Elektromotor
- 2: Drehzahlbestimmungseinheit
- 3: Regler
- 4: Inverter
- T, T₁, T₂: Periodendauer der Periodizität bzw. Last- und/oder Messperiode
- t₁ bis tₙ: Messzeitpunkte während der ersten Periodendauer
- t₁' bis tₙ': Messzeitpunkte während der zweiten Periodendauer
- M₁ bis Mₙ: Messwerte während der ersten Periodendauer
- M₁' bis Mₙ': Messwerte während der zweiten Periodendauer
- n: Anzahl der Messzeitpunkte / Messwerte
- w: Führungsgröße (Sollwert der Drehzahl)

## Patentansprüche

1. Verfahren zur Regelung einer Regelgröße eines Antriebsmotors auf eine vorgegebene Führungsgröße (w),
wobei der Istwert und/oder der gemessene Istwert der Regelgröße durch einen fluktuierenden Effekt mit einer gewissen Periodizität beeinflusst wird,
wobei die Regelgröße nur dann nachgeregelt wird, wenn eine Regeldifferenz zwischen der Führungsgröße (w) und einem über die Periodendauer (T, T₁, T₂) der Periodizität gemittelten Mittelwert des Istwerts der Regelgröße besteht,
wobei innerhalb der Periodendauer (T, T₁, T₂) einer jeden Periodizität zu konkreten Messzeitpunkten (t₁ bis tₙ, t₁' bis tₙ') in einem gewissen Reglertakt Messwerte (M₁ bis Mₙ, M₁' bis Mₙ') ermittelt werden, die mit dem jeweiligen Istwert der Regelgröße korrelieren oder dem Istwert der Regelgrösse entsprechen, und/oder aus welchen sich die Regeldifferenz zwischen der Führungsgröße (w) und dem Mittelwert des Istwertes der Regelgröße ermitteln lässt, **dadurch gekennzeichnet, dass** die Regeldifferenz zu jedem konkreten Messzeitpunkt (t₁ bis tₙ, t₁' bis tₙ') ermittelt wird und die Regelgröße gegebenenfalls nachgeregelt wird.

2. Verfahren nach Anspruch 1, **dadurch gekennzeichnet, dass** zur Ermittlung der Regeldifferenz ein Differenzwert zwischen dem Messwert zum aktuellen Messzeitpunkt und dem entsprechenden um die Anzahl n an Messzeitpunkten zurückliegenden Messwert der vorhergehenden Periodizität berechnet wird, wobei die Regeldifferenz aus diesem Differenzwert abgeleitet wird.

3. Verfahren nach einem der Ansprüche 1 bis 2, **dadurch gekennzeichnet, dass** zur Ermittlung der Regeldifferenz der tatsächliche Mittelwert der Regelgröße aus dem Messwert zum aktuellen Messzeitpunkt sowie aus den n-1 Messwerten der zurückliegenden n-1 Messzeitpunkte berechnet wird.

4. Verfahren nach einem der Ansprüche 1 bis 3, **dadurch gekennzeichnet, dass** der Reglertakt derart gewählt wird, dass mindestens 6 Messzeitpunkte (M₁ bis Mₙ, M₁' bis Mₙ') innerhalb der Periodendauer (T, T₁, T₂) der Periodizität liegen.

5. Verfahren nach Anspruch 4, **dadurch gekennzeichnet, dass** der Reglertakt derart gewählt wird, dass mindestens 12 Messzeitpunkte (M₁ bis Mₙ, M₁' bis Mₙ') innerhalb der Periodendauer (T, T₁, T₂) der Periodizität liegen.

6. Verfahren nach einem der Ansprüche 1 bis 5, **dadurch gekennzeichnet, dass** die Periodendauer (T, T₁, T₂) der Periodizität fortlaufend durch Auswertung der Messwerte (M₁ bis Mₙ, M₁' bis Mₙ') ermittelt wird.

7. Verfahren nach einem der Ansprüche 1 bis 6, **dadurch gekennzeichnet, dass** sich das Verfahren auf ein Verfahren zur Regelung eines Antriebsmotors (1) bezieht, wobei die Regelgröße die Drehzahl des Antriebsmotors ist.

8. Verfahren nach einem Ansprüche 1 bis 7, **dadurch gekennzeichnet, dass** der Istwert der Regelgrösse durch eine fluktuierende Last mit einer gewissen Lastperiode beeinflusst wird.

9. Verfahren nach einem der Ansprüche 1 bis 7, **dadurch gekennzeichnet, dass** der gemessene Istwert der Regelgrösse durch periodische Messfehler innerhalb einer Messperiode, insbesondere durch Teilungsfehler oder Ungenauigkeiten in einer Massverkörperung eines Drehgebers, beeinflusst wird.

10. Maschinenlesbarer Datenträger mit einem Programm, wobei der Datenträger der Motorregelung eines Antriebsmotors (1) zugeordnet ist, und wobei das Programm eine Befehlsfolge enthält, bei deren Ausführung durch einen Prozessor ein Verfahren nach einem der Ansprüche 1 bis 9 ausgeführt wird.

11. Motorregelung für einen Antriebsmotor (1), **dadurch gekennzeichnet, dass** die Motorregelung zur Ausführung des Verfahrens nach einem der Ansprüche 1 bis 9 ausgelegt und eingerichtet ist.

12. Antriebsmotor (1), **dadurch gekennzeichnet, dass** der Antriebsmotor (1) einen Rotor sowie eine Motorregelung nach Anspruch 11 aufweist.

13. Antriebsmotor (1) nach Anspruch 12, **dadurch gekennzeichnet, dass** der Antriebsmotor (1) zumindest einen Sensor zur Erfassung der Lage oder Position oder Geschwindigkeit des Rotors aufweist, wobei die Motorregelung derart eingerichtet ist, dass sie die Regeldifferenz anhand von Messwerten errechnet, die vom Sensor bereitgestellt werden.

14. Antriebsmotor (1) nach Anspruch 13, **dadurch gekennzeichnet, dass** der Antriebsmotor (1) ein Elektromotor ist, wobei der Sensor ein Hallsensor ist, dessen Signal auch zur Kommutierung des Elektromotors verwendet wird.

15. Antriebsmotor (1) mit einem Rotor und einer Motorregelung, welche zur Ausführung des Verfahrens nach einem der Ansprüche 1 bis 8 ausgelegt und eingerichtet ist, **dadurch gekennzeichnet, dass** der Antriebsmotor (1) ein Elektromotor ist und wobei die Motorregelung weiter derart eingerichtet ist, dass sie die Regeldifferenz anhand von Werten errechnet, die sie sensorlos anhand der Parameter Induktivität und elektromagnetische Kraft durch einen Algorithmus zur Bestimmung der Lage oder Position oder Geschwindigkeit des Rotors erzeugt.

## Claims

1. A method for closed-loop control of a controlled variable of a drive motor to a given reference variable (w), wherein the actual value and/or the measured actual value of the controlled variable is/are influenced by a fluctuating effect with a certain periodicity,
wherein the controlled variable is only readjusted, if there is a control difference between the reference variable (w) and an average value of the actual value of the controlled variable averaged over the period duration (T, T₁, T₂) of the periodicity,
wherein measurement values (M₁ to Mₙ, M₁' to Mₙ') are determined within the period duration (T, T₁, T₂) of each periodicity at concrete measurement time points (t₁ to tₙ, t₁' to tₙ') in a certain controller cycle, these measurement values correlating with the respective actual value of the controlled variable or corresponding to the actual value of the controlled variable, and/or being adapted to determine therefrom the control difference between the reference variable (w) and the average value of the actual value of the controlled variable,
**characterized in that** the control difference is determined at each concrete measurement time point (t₁ to tₙ, t₁' to tₙ') and the controlled variable is readjusted, if necessary.

2. The method according to claim 1, **characterized in that**, for determining the control difference, a differential value between the measurement value at the current measurement time point and the respective measurement value of the preceding periodicity that was recorded n measurement time points earlier is calculated, the control difference being derived from this differential value.

3. The method according to one of the claims 1 to 2, **characterized in that**, for determining the control difference, the actual average value of the controlled variable is calculated from the measurement value at the current measurement time point as well as from the n-1 measurement values of the earlier n-1 measurement time points.

4. The method according to one of the claims 1 to 3, **characterized in that** the controller cycle is chosen such that at least six measurement time points (M₁ to Mₙ, M₁' to Mₙ') lie within the period duration (T, T₁, T₂) of the periodicity.

5. The method according to claim 4, **characterized in that** the controller cycle is chosen such that at least twelve measurement time points (M₁ to Mₙ, M₁' to Mₙ') lie within the period duration (T, T₁, T₂) of the periodicity.

6. The method according to one of the claims 1 to 5, **characterized in that** the period duration (T, T₁, T₂) of the periodicity is determined continuously by evaluating the measurement values (M₁ to Mₙ, M₁' to Mₙ').

7. The method according to one of the claims 1 to 6, **characterized in that** the method relates to a method for closed-loop control of a drive motor (1), the controlled variable being the speed of the drive motor.

8. The method according to one of the claims 1 to 7, **characterized in that** the actual value of the controlled variable is influenced by a fluctuating load with a certain load period.

9. The method according to one of the claims 1 to 7, **characterized in that** the measured actual value of the controlled variable is influenced by periodic measurement errors within a measurement period, in particular by pitch errors or inaccuracies in a material measure of a rotary encoder.

10. A machine-readable data carrier with a program, wherein the data carrier is associated with the motor control unit of a drive motor (1), and wherein the program comprises a sequence of instructions, which, when executed by a processor, lead to execution of a method according to one of the claims 1 to 9.

11. A motor control unit for a drive motor (1), **characterized in that** the motor control unit is configured to and adapted to execute the method according to one of the claims 1 to 9.

12. A drive motor (1), **characterized in that** the drive motor (1) comprises a rotor as well as a motor control unit according to claim 11.

13. The drive motor (1) according to claim 12, **characterized in that** the drive motor (1) comprises at least one sensor for detecting the position or location or speed of the rotor, wherein the motor control unit is configured to calculate the control difference on the basis of measurement values provided by the sensor.

14. The drive motor (1) according to claim 13, **characterized in that** the drive motor (1) is an electric motor, the sensor being a Hall sensor whose signal is also used for commutating the electric motor.

15. A drive motor (1) comprising a rotor and a motor control unit, configured to and adapted to execute the method according to one of the claims 1 to 8, **characterized in that** the drive motor (1) is an electric motor and the motor control unit is additionally configured to calculate the control difference on the basis of values which it generates, without making use of a sensor, on the basis of the parameters inductance and electromagnetic force by an algorithm for determining the position or location or speed of the rotor.

## Revendications

1. Procédé de régulation d'une grandeur de régulation d'un moteur d'entraînement conformément à une grandeur de guidage (w) prédéfinie,
dans lequel la valeur réelle et/ou la valeur réelle mesurée de la grandeur de régulation est influencée par un effet fluctuant présentant une périodicité spécifique, dans lequel la grandeur de régulation n'est réajustée que s'il existe une différence de régulation entre la grandeur de guidage (w) et une valeur moyenne, calculée sur la durée de période (T, T ₁, T₂) de la périodicité, de la valeur réelle de la grandeur de régulation
dans lequel des valeurs de mesure (M₁ à Mₙ, M₁' à M_{n'}), corrélées avec la valeur réelle respective de la grandeur de régulation ou correspondant à la valeur réelle de la grandeur de régulation et/ou à partir desquelles la différence de régulation entre la grandeur de guidage (w) et la valeur moyenne de la valeur réelle de la grandeur de régulation peut être déterminée, sont déterminées à l'intérieur de la période (T, T₁, T₂) de chaque périodicité à des instants de mesure concrets (t₁ à tₙ, t_{1'} à tₙ') avec une cadence de régulation spécifique,
**caractérisé en ce que** la différence de régulation est déterminée à chaque instant de mesure concret (t₁ à tₙ, t_{1'} à tₙ') et la grandeur de régulation est éventuellement réajustée.

2. Procédé selon la revendication 1, **caractérisé en ce que**, afin de déterminer la différence de régulation, une valeur de différence entre la valeur de mesure à l'instant de mesure actuel et la valeur de mesure correspondante, remontant au nombre n d'instants de mesure, de la périodicité précédente est calculée, dans lequel la différence de régulation est calculée à partir de ladite valeur de différence.

3. Procédé selon la revendication 1 ou 2, **caractérisé en ce que**, afin de déterminer la différence de régulation, la valeur moyenne effective de la grandeur de régulation est calculée à partir de la valeur de mesure à l'instant de mesure actuel ainsi qu'à partir des n-1 valeurs de mesure des n-1 instants de mesure passés.

4. Procédé selon l'une quelconque des revendications 1 à 3, **caractérisé en ce que** la cadence de régulation est choisie de telle manière qu'au moins 6 instants de mesure (M₁ à Mₙ, M_{1'} à M_{n'}) se situent à l'intérieur de la durée de période (T, T₁, T₂) de la périodicité.

5. Procédé selon la revendication 4, **caractérisé en ce que** la cadence de régulation est choisie de telle manière qu'au moins 12 instants de mesure (M₁ à Mₙ, M_{1'} à M_{n'}) se situent à l'intérieur de la durée de période (T, T₁, T₂) de la périodicité.

6. Procédé selon l'une quelconque des revendications 1 à 5, **caractérisé en ce que** la durée de période (T, T₁, T₂) de la périodicité est déterminée en continu grâce à l'évaluation des valeurs de mesure (M₁ à Mₙ, M_{1'} à M_{n'}).

7. Procédé selon l'une quelconque des revendications 1 à 6, **caractérisé en ce que** le procédé se réfère à un procédé de régulation d'un moteur d'entraînement (1), dans lequel la grandeur de régulation est la vitesse de rotation du moteur d'entraînement.

8. Procédé selon l'une quelconque des revendications 1 à 7, **caractérisé en ce que** la valeur réelle de la grandeur de régulation est influencée par une charge fluctuante présentant une période de charge spécifique.

9. Procédé selon l'une quelconque des revendications 1 à 7, **caractérisé en ce que** la valeur réelle mesurée de la grandeur de régulation est influencée par des erreurs de mesure périodiques à l'intérieur d'une période de mesure, en particulier par des erreurs de division ou des inexactitudes dans une mesure matérialisée d'un encodeur rotatif.

10. Support de données lisible par machine et comprenant un programme, dans lequel le support de données est associé à la régulation de moteur d'un moteur d'entraînement (1), et dans lequel le programme comprend une séquence d'instructions au cours de la mise en oeuvre de laquelle un procédé selon l'une quelconque des revendications 1 à 9 est exécuté par un processeur.

11. Régulation de moteur pour un moteur d'entraînement (1), **caractérisée en ce que** la régulation de moteur est conçue et organisée pour la mise en oeuvre du procédé selon l'une quelconque des revendications 1 à 9.

12. Moteur d'entraînement (1), **caractérisé en ce que** le moteur d'entraînement (1) présente un rotor et une régulation de moteur selon la revendication 11.

13. Moteur d'entraînement (1) selon la revendication 12, **caractérisé en ce que** le moteur d'entraînement (1) présente au moins un capteur permettant de détecter la situation ou la position ou la vitesse du rotor, dans lequel la régulation de moteur est organisée de manière à calculer la différence de régulation à partir de valeurs de mesure fournies par le capteur.

14. Moteur d'entraînement (1) selon la revendication 13, **caractérisé en ce que** le moteur d'entraînement (1) est un moteur électrique, dans lequel le capteur est un capteur à effet Hall dont le signal est également utilisé pour la commutation du moteur électrique.

15. Moteur d'entraînement (1) comprenant un rotor et une régulation de moteur conçue et organisée pour mettre en œuvre le procédé selon l'une quelconque des revendications 1 à 8, **caractérisé en ce que** le moteur d'entraînement (1) est un moteur électrique et **en ce que** la régulation de moteur est en outre organisée de manière à calculer la différence de régulation à partir de valeurs qu'elle génère sans capteur à partir des paramètres d'inductance et de force électromagnétique grâce à un algorithme permettant de déterminer la situation ou la position ou la vitesse du rotor.
